# EUROPÄISCHE PATENTANMELDUNG

(11) **EP 4 660 553 A1**
(43) Veröffentlichungstag der Anmeldung: **10.12.2025**
(21) Anmeldenummer: 24180433.5
(22) Anmeldetag: 06.06.2024
(51) Int. Cl.: F24H 4/04

(54) **COMPUTER-IMPLEMENTIERTES VERFAHREN ZUM EINSTELLEN VON MINDESTENS EINEM PARAMETER IN BEZUG AUF EINE HEIZVORRICHTUNG**

(71) Anmelder: Siemens Aktiengesellschaft, 80333 München (DE)
(72) Erfinder: Kautz, Martin, 91056 Erlangen (DE); Reissner, Florian, 90411 Nürnberg (DE); Schütz, Thomas, 90765 Fürth (DE); Thiem, Sebastian, 91413 Neustadt an der Aisch (DE)
(74) Vertreter: Siemens Patent Attorneys

(57) **Zusammenfassung**

Die Erfindung betrifft ein computer-implementiertes Verfahren zum Einstellen von mindestens einem Parameter in Bezug auf eine Heizvorrichtung, aufweisend die Schritte a. Einstellen der Heizvorrichtung mit mindestens einem ersten Wert des mindestens einen Parameters (S1); b. Einstellen der Heizvorrichtung mit mindestens einem zweiten Wert des mindestens einen Parameters (S2); wobei der mindestens eine zweite Wert durch Variieren des mindestens einen ersten Wertes bestimmt wird (S3); c. Erfassen von Messdaten für die jeweiligen Einstellungen der mindestens zwei Einstellungen (S4); wobei die Messdaten jeweils mindestens einen Messwert und mindestens einen Zielwert aufweisen; d. Ermitteln eines optimalen Wertes aus der Mehrzahl der Werte mittels eines Optimierungsansatzes auf Basis der Messdaten (S5); und e. Bereitstellen des optimalen Wertes des mindestens einen Parameters (S6). Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Einstellen von mindestens einem Parameter in Bezug auf eine Heizvorrichtung. Ferner ist die Erfindung auf ein entsprechendes technisches System und ein Computerprogrammprodukt gerichtet.

### 2. Stand der Technik

Wärmepumpen gewinnen zunehmend an Bedeutung. Sie sind aus dem Stand der Technik bekannt und werden für die klimaneutrale Wärmeversorgung eingesetzt. Üblicherweise werden Sie für die Beheizung von Gebäuden eingesetzt. Heizungsinstallateure oder andere Installateursfirmen installieren die Wärmepumpen herkömmlicherweise.

Für den Betrieb der Wärmepumpe werden die Parameter eingestellt. Es ist wünschenswert, die Parameter derart einzustellen, dass ein möglichst energieeffizienter Betrieb der Wärmepumpe erreicht wird (beispielsweise geringer Stromverbrauch).

Beispielhafte Parameter bei einer außentemperaturgesteuerten Heizungsregelung der Wärmepumpe sind:
- Steigung der Heizkennlinie (außentemperaturabhängig)
- Parallelverschiebung der Heizkennlinie (außentemperaturabhängig)
- Maximal zulässige Vorlauftemperatur der Heizkreise
- Solltemperatur des Brauchwasserspeichers

Die Einstellung der Parameter nach Installation der Wärmepumpe erfolgt gemäß dem Stand der Technik meist durch den Heizungsinstallateur, durch eine zertifizierte Fachfirma oder durch die Servicefirma des Wärmepumpen-Herstellers. Weiterhin können die Parameter üblicherweise von den Besitzern oder Nutzern des Gebäudes während des Betriebes verändert werden.

Nachteilig daran ist jedoch, dass bei der Einstellung und/oder Anpassung der Parameter der Wärmepumpe (wie Nachstellung) eine erforderliche Zielgröße wie Effizienz oder Nachhaltigkeit des Betriebs nicht hinreichend Berücksichtigung findet. In der Regel wird gemäß dem Stand der Technik die Zielgröße vernachlässigt. Mit anderen Worten wird die Effizienz der Wärmepumpe nicht hinreichend beachtet oder überwacht.

Ein weiterer Nachteil liegt darin, dass die Einstellung manuell erfolgt und folglich ein Eingriff durch eine Person erforderlich ist, wie Servicefirma. Dieser Ansatz ist allerdings fehleranfällig und ineffizient. Die Zuverlässigkeit der Einstellung und des Betriebs der Wärmepumpe kann nicht hinreichend gewährleistet werden.

Beispielsweise stellt der Heizungsinstallateur die Parameter meist sehr konservativ ein. Er stellt sie meist mit deutlich erhöhten Temperaturen als notwendig ein, sodass sich der Endkunde sicher nicht mehr meldet, da es zu kalt ist. Weiterhin sprechen sich der Heizungsinstallateur oder die Fachfirma nicht ausreichend ab wer die Einstellung der Parameter vornimmt. Die Heizungsinstallateure haben meist wenig Erfahrung mit der kontinuierlichen gleichmäßigen Wärmeerzeugung einer Wärmepumpe gegenüber früheren fossilen Heizungssystemen. Die Besitzer oder die Nutzer ändern die Parameter eigenmächtig, ohne die Konsequenzen für die Effizienz der Wärmepumpe daraus abschätzen zu können. Die Nutzeranforderungen können sich dynamisch ändern und werden nicht hinreichend beachtet, wie durch längere Abwesenheiten oder ändernde Nutzer durch Neuvermietung, Verkauf, Auszug und/oder Einzug.

Die vorliegende Erfindung stellt sich daher die Aufgabe ein computer-implementiertes Verfahren zum Einstellen von mindestens einem Parameter in Bezug auf eine Heizvorrichtung bereitzustellen, welches effizienter und zuverlässiger ist.

### 3. Zusammenfassung der Erfindung

Die oben genannte Aufgabe wird erfindungsgemäß durch ein computer-implementiertes Verfahren zum Einstellen von mindestens einem Parameter in Bezug auf eine Heizvorrichtung gelöst, aufweisend die Schritte:
a. Einstellen der Heizvorrichtung mit mindestens einem ersten Wert des mindestens einen Parameters;
b. Einstellen der Heizvorrichtung mit mindestens einem zweiten Wert des mindestens einen Parameters; wobei
   der mindestens eine zweite Wert durch Variieren des mindestens einen ersten Wertes bestimmt wird;
c. Erfassen von Messdaten für die jeweiligen Einstellungen der mindestens zwei Einstellungen; wobei
   die Messdaten jeweils mindestens einen Messwert und mindestens einen Zielwert aufweisen;
d. Ermitteln eines optimalen Wertes aus der Mehrzahl der Werte mittels eines Optimierungsansatzes auf Basis der Messdaten; und
e. Bereitstellen des optimalen Wertes des mindestens einen Parameters.

Dementsprechend ist die Erfindung auf ein computer-implementiertes Verfahren zum Einstellen von mindestens einem Parameter in Bezug auf eine Heizvorrichtung gerichtet. Mit anderen Worten werden ein oder mehrere Parameter für den Betrieb der Heizvorrichtung eingestellt. Das Einstellen der Parameter kann auch als Parametertuning bezeichnet werden. Der Begriff Einstellen ist weit zu fassen und umfasst auch das Nachstellen oder Nachjustieren sowie das Anpassen der Parameter.

In einem ersten Verfahrensschritt wird die Heizvorrichtung mit dem mindestens einen ersten Wert des mindestens einen Parameters eingestellt. Der erste Wert kann dementsprechend auch als voreingestellter Wert oder Basiswert bezeichnet werden. Diese erste Einstellung kann durch eine Person vorgenommen werden, wie Servicebeauftragter des Besitzers der Heizvorrichtung oder Nutzer der Heizvorrichtung. Mit anderen Worten erfolgt mindestens eine erste Einstellung.

In einem zweiten Verfahrensschritt wird die Heizvorrichtung mit dem mindestens einen zweiten Wert des mindestens einen Parameters eingestellt. Der mindestens eine zweite Wert wird durch Variieren des mindestens einen ersten Wertes festgelegt. Der zweite Wert kann dementsprechend auch als geänderter Wert oder variierter Wert bezeichnet werden. Der erste Wert unterscheidet sich somit vom zweiten Wert. Bevorzugt liegt eine Mehrzahl unterschiedlicher Variationen oder zweiter Werte basierend auf dem ersten Wert vor. Es erfolgt mindestens eine zweite Einstellung.

In einem weiteren Verfahrensschritt werden die Messdaten für die jeweiligen Einstellungen der mindestens zwei Einstellungen erfasst. Die Messdaten können mittels einer Erfassungseinheit wie Sensoreinheit erfasst werden. Die Messdaten weisen dabei Messwerte und Zielwerte auf. Die Messwerte können auch als gemessene Istgrößen bezeichnet werden. Beispielsweise wird der Parameter "Heizkennlinie" betrachtet und die Werte dieses Parameters werden variiert. Die Heizvorrichtung wird mit den unterschiedlichen Werten eingestellt und betrieben. Die Istgrößen können beispielsweise die Außentemperatur, die Temperatur des Heizkreisrücklaufs und/oder die Stromaufnahme sein, welche erfasst werden. Die Zielwerte sind beispielsweise Effizienzwerte, wie die Stromaufnahme eines Verdichters. Die Effizienzwerte können Aufschluss darüber geben, ob die Variation bzw. der Einstellung der Heizvorrichtung mit dem zweiten Wert zu einem effizienteren Betrieb geführt hat oder nicht.

In einem weiteren Verfahrensschritt erfolgt die Ermittlung des optimalen Wertes aus der Mehrzahl der Werte. Dabei wird ein Optimierungsansatz auf die Messdaten angewendet. Beim Optimierungsansatz kann es sich um einen statistischen Ansatz oder mathematisches Modell handeln, wie MINLP (Mixed Integer Non Linear Program). Alternativ kann als Optimierungsansatz auch ein Modell zum Maschinellen Lernen verwendet werden. Bezugnehmend auf die Effizienzwerte, wird der Wert aus den Werten ausgewählt, welcher verglichen mit den restlichen oder verbleibenden Werten zu einer höheren Effizienz oder höchsten Effizienz des Betriebs der Heizvorrichtung führt. Dadurch kann der Betrieb signifikant verbessert werden im Hinblick auf e.g. die Energieeffizienz eines Gebäudes.

Der optimale Wert des mindestens einen Parameters wird im letzten Verfahrensschritt bereitgestellt.

Die vorliegende Erfindung stellt folglich sicher, dass die Einstellung des mindestens einen Parameters in Bezug auf die Heizvorrichtung zuverlässig und effizient erfolgt.

Mit anderen Worten erfolgt ein Tuning der Heizparameter durch Lernen aus vergangenem Betrieb bzw. historischen Daten. Dadurch nähert sich das Einstellen der Parameter schrittweise einem Optimum. Die Heizvorrichtung kann auch kontinuierlich für einen optimalen Betrieb nachgestellt werden. Beispielsweise wird die Effizienz als Zielgröße optimiert. Die Einstellung des mindestens einen Parameters erfolgt vorteilhafterweise ohne manuellen Eingriff von Personal vor Ort oder Installation zusätzlicher Messtechnik auf effiziente und zuverlässige Art und Weise.

In einer Ausgestaltung ist die Heizvorrichtung zur Beheizung von einem Gebäude oder einer Anlage eingerichtet. Dementsprechend ist die Heizvorrichtung als eine Vorrichtung zum Beheizen oder Heizen der Gebäude oder der Anlagen auszulegen. Die Heizvorrichtung kann auch nur Teile wie Räume des Gebäudes oder der Anlage beheizen. Das Gebäude kann als intelligentes Gebäude ("Smart Building") ausgebildet sein. Die Anlage kann als industrielle Anlage ausgebildet sein, wie Fertigungsanlage.

In einer weiteren Ausgestaltung ist die Heizvorrichtung eine Wärmepumpe. Dementsprechend ist die Heizvorrichtung eine Wärmepumpe, welche für die klimaneutrale Wärmeversorgung ausgebildet ist.

Beispielsweise wird die Wärmepumpe mit dem optimalen Wert des mindestens einen Parameters derart eingestellt, dass die Energieeffizienz gesteigert wird und somit Energie eingespart wird. Das zugrundeliegende Gebäude, welches mit der Wärmepumpe beheizt wird, ist folglich auch energieeffizient und "smart". Ferner kann auch die zugrundeliegende Fertigungsanlage hinsichtlich der Energieeffizienz verbessert werden, derart, dass folglich die Fertigung effizienter wird. Ferner kann durch die optimale Einstellung der Wärmepumpe der Komfort der Nutzer erhöht werden und/oder ein sicherer Betrieb gewährleistet werden.

In einer weiteren Ausgestaltung sind die Werte, der mindestens eine Parameter und/oder die Messdaten auf der Heizvorrichtung, bevorzugt auf einem Regler der Heizvorrichtung gespeichert, und/oder die Einstellung des mindestens einen Parameters erfolgt auf der Heizvorrichtung. Dementsprechend erfolgt die Einstellung des mindestens einen Parameters offline, beispielsweise hinterlegt auf dem Regler der Wärmepumpe, welcher nicht fernaktualisierbar ist.

In einer weiteren Ausgestaltung ist der mindestens eine Parameter ein Parameter, ausgewählt aus der Gruppe bestehend aus:
eine Heizkennlinie, eine Temperatur, eine Vorlauftemperatur, eine Solltemperatur und eine Speichertemperatur. Dementsprechend können jegliche Parameter der Heizvorrichtung mittels des computer-implementierten Verfahrens eingestellt werden. Der Parameter steht in Beziehung mit der Heizvorrichtung. Die Parameter können sich je nach Heizvorrichtung unterscheiden. Beispielsweise können die Parameter der Wärmepumpe betrachtet werden. Alternativ können auch die Parameter von fossilen Heizungssystemen betrachtet werden. Die Parameter können flexibel in Abhängigkeit von der Heizvorrichtung, dem Nutzer der Heizvorrichtung, dem Besitzer der Heizvorrichtung, dem zugrundeliegenden Gebäude oder der zugrundeliegenden Anlage, den Nutzerpräferenzen und/oder jeglichen anderen Bedingungen ausgewählt werden.

In einer weiteren Ausgestaltung werden die Messdaten für die jeweiligen Einstellungen der mindestens zwei Einstellungen über mindestens einen bestimmten Zeitraum und/oder unter einem bestimmten Zustand erfasst. Dementsprechend wird eine Mehrzahl von Messdaten über einen oder mehrere Zeiträume erfasst. Der Zeitraum ist vordefiniert oder festgelegt. Die Erfassung der Messdaten erfolgt bevorzugt zu einem bestimmten Zeitpunkt und gleichem äußerem Zustand der Heizvorrichtung. Beispielsweise ist die Außentemperatur über einen bestimmten Zeitraum wie 4 Stunden konstant mit 5°C. Folglich werden die Messdaten für die mindestens zwei Einstellungen der Heizvorrichtung bei der bestimmten Außentemperatur von 5°C und über den bestimmten Zeitraum von 4 Stunden erfasst. Dies hat den Vorteil, dass die Datenerfassung zuverlässig ist und die Messdaten eine sichere Datenbasis für die Ermittlung des optimalen Wertes aus der Mehrzahl der Werte mittels eines Optimierungsansatzes bilden.

In einer weiteren Ausgestaltung umfasst die Ermittlung des optimalen Wertes einen Vergleich der jeweiligen Zielwerte der jeweiligen Einstellungen der mindestens zwei Einstellungen, und der optimale Wert aus der Mehrzahl der Werte wird unter Berücksichtigung des Vergleichs ausgewählt.

In einer weiteren Ausgestaltung wird der optimale Wert aus der Mehrzahl der Werte des geringsten oder des höchsten Zielwertes ausgewählt.

In einer weiteren Ausgestaltung ist der Zielwert ein Effizienzwert oder ein Nachhaltigkeitswert, wobei die Heizvorrichtung mit dem Zielwert effizient oder nachhaltig betrieben wird.

Dementsprechend werden bei der Ermittlung des optimalen Wertes die Zielwerte miteinander verglichen, wie die Effizienzwerte oder die Nachhaltigkeitswerte. Der optimale Wert, welcher ausgewählt wird, kann dabei der effizienteste oder nachhaltigste Wert sein. Beispielsweise wird derjenige Wert ausgewählt, welcher zum effizientesten oder nachhaltigsten Betrieb der Heizvorrichtung führt.

In einer weiteren Ausgestaltung weist das computer-implementierte Verfahren weiterhin auf
- Bereitstellen von weiteren Eingabedaten, und
- Berücksichtigung der weiteren Eingabedaten bei der Ermittlung des optimalen Wertes aus der Mehrzahl der Werte.

In einer weiteren Ausgestaltung werden die weiteren Eingabedaten von einer Speichereinheit und/oder über eine Eingabeschnittstelle empfangen.

Dementsprechend werden die erfassten Messdaten um weitere Eingabedaten wie Messdaten oder Wetterdaten ergänzt und bei der Ermittlung des optimalen Werts des mindestens einen Parameters mit berücksichtigt. Die weiteren Eingabedaten können in einer flüchtigen oder nichtflüchtigen Speichereinheit gespeichert werden, bevorzugt Datenbank oder Cloud. Die Speichereinheit ermöglicht eine zuverlässige und schnelle Datensicherung. Die Speichereinheit kann hinsichtlich ihrer Speicherkapazität sowie Skalierbarkeit etc. flexibel ausgewählt werden. Ein weiterer Vorteil liegt darin, dass auf die Daten effizient zugegriffen werden kann. Die weiteren Eingabedaten können über eine oder mehrere Schnittstellen durch die Heizvorrichtung wie einen Regler oder eine Recheneinheit der Heizvorrichtung empfangen werden. Dementsprechend werden die Eingabedaten über die Eingabeschnittstelle empfangen. Zusätzlich oder alternativ können die Ausgabedaten wie der optimale Wert auch über eine Ausgabeschnittstelle gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Die Daten können bidirektional ausgetauscht werden ohne Datenstau.

Mit anderen Worten kann die Heizvorrichtung eine bidirektionale Konnektivität zu einer Speichereinheit aufweisen, wie Cloud. Folglich kann die Ermittlung des optimalen Wertes auch online erfolgen.

In einer weiteren Ausgestaltung weist das computer-implementierte Verfahren weiterhin auf
- Einstellen der Heizvorrichtung mit dem optimalen Wert des mindestens einen Parameters, und/oder
- Betreiben der Heizvorrichtung nach erfolgter Einstellung mit dem optimalen Wert des mindestens einen Parameters.

Dementsprechend wird die Heizvorrichtung mit dem optimalen Wert des mindestens einen Parameters nach dessen Ermittlung auch optimal eingestellt, wie im Hinblick auf die Effizienz oder Nachhaltigkeit. Die Heizvorrichtung kann auch effizient und nachhaltig betrieben werden nach erfolgter Einstellung. Mit anderen Worten stellt die optimale Einstellung auch den verbesserten Betrieb sicher.

In einer weiteren Ausgestaltung weist das computer-implementierte Verfahren weiterhin auf
- Ausgeben des optimalen Wertes des mindestens einen Parameters und/oder zugehöriger Daten auf einer Anzeigeeinheit,
- Speichern des optimalen Wertes des mindestens einen Parameters und/oder zugehöriger Daten in einer Speichereinheit, und/oder
- Übermitteln des optimalen Wertes des mindestens einen Parameters und/oder zugehöriger Daten an eine Recheneinheit.

Dementsprechend können eine oder mehrere Maßnahmen nach der Bereitstellung des optimalen Werts als Ausgabewert des erfindungsgemäßen Verfahrens eingeleitet werden. Die Maßnahmen können gleichzeitig, nacheinander oder auch stufenweise durchgeführt werden.

Als erstes kann der Ausgabewert dem Nutzer der Heizvorrichtung oder einer anderen Person auf einer Anzeigeeinheit einer Recheneinheit angezeigt werden. Weiterhin kann der Ausgabewert gespeichert werden, der Ausgabewert selbst oder in Form einer entsprechenden Nachricht oder Mitteilung an eine andere Recheneinheit, wie ein Endgerät oder eine Steuereinheit übertragen werden. Die empfangende Recheneinheit kann nach Empfang ebenfalls weitere entsprechende Maßnahmen einleiten.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.

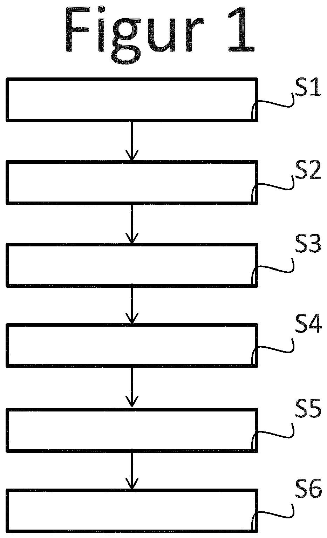

FIG 1 zeigt ein schematisches Ablaufdiagramm des erfindungsgemäßen Verfahrens.

### 5. Beschreibung der bevorzugten Ausführungsformen

Im Folgenden werden bevorzugte Ausführungsformen der vorliegenden Erfindung in Bezug auf die Figur 1 beschrieben.
- Figur 1: stellt ein Ablaufdiagramm des erfindungsgemäßen Verfahrens mit den Verfahrensschritten S1 bis S6 schematisch dar.

Der Wert eines Parameters (z.B. Steigung der Heizkennlinie) wird gemäß einer Ausführungsform der Erfindung für einen festgelegten Zeitraum im Wert leicht nach oben oder unten variiert. Die Heizvorrichtung wird mit den unterschiedlichen Werten des Parameters eingestellt und betrieben. Bei wiederkehrenden äußeren Zuständen werden die Messdaten, wie die Messwerte (z.B. Außentemperatur) und die Zielwerte (z.B. Stromaufnahme des Verdichters) in diesem Zeitraum gemessen. Durch den Vergleich der Zielwerte bei gleichem äußerem Zustand kann ermittelt werden, ob die Variation zu einem effizienteren Betrieb der Heizvorrichtung geführt hat oder nicht. Falls ja, kann der neue Wert übernommen werden.

Beispielsweise ist eine Wärmepumpe gemäß einer Ausführungsform der Erfindung mit einer Steigung einer Heizkennlinie von 0,5 eingestellt. Dabei liegt in einer Nacht eine konstante Außentemperatur von 5°C über den Zeitraum von 4 Stunden vor. Eine Erfassungseinheit erfasst die Messwerte, wie die Außentemperatur, die Temperatur des Heizkreisrücklaufs und die Stromaufnahme während des Zeitraums von 4 Stunden. In einer folgenden Nacht liegen ebenfalls 5°C vor und ein Tuner startet eine Variation der Heizkennlinie auf einen Wert von 0,45. Die gleichen Messwerte werden erneut bei der Außentemperatur von 5°C über den Zeitraum von 4 Stunden erfasst. Falls die Rücklauftemperatur annähernd identisch ist und die Stromaufnahme merklich reduziert wird, kann daraus abgeleitet werden, dass eine Heizkennlinie mit Steigung von 0,45 ausreicht bei annähernd gleichem Komfort.

Durch oftmaliges Wiederholen der Variation für unterschiedliche Zeiträume und Parameter kann nach gewisser Zeit der Betrieb an ein Optimum herangeführt werden. Durch ändernde Nutzerstruktur (bspw. neue Mieter in einem Gebäude und andere Nutzungscharakteristik) kann der Lernvorgang kontinuierlich erfolgen. Der Lernvorgang kann kontinuierlich nachgeführt und "immer weiter optimiert" werden.

Als Zielwerte können neben der Effizienz der Heizvorrichtung (also eine Maximierung des COPs) alternativ oder zusätzlich andere Zielgrößen genutzt werden, wie die Minimierung der Starts des Verdichters, die Minimierung der Betriebszeit in ineffizienten oder lebensdauerverkürzenden Betriebszuständen der Komponenten des Wärmepumpenkreislaufs.

Weiterhin besteht die Möglichkeit, dass die Parameter wieder in den optimalen Zustand gesetzt werden, wenn sich beispielsweise nach einer Wartung oder durch Verschleiß nicht verschlechterte bzw. keine optimalen Betriebsbedingungen mehr ergeben.

Weitere Eingabedaten können gemäß einer Ausführungsform der Erfindung für eine kontinuierliche Optimierung der Heizparameter genutzt werden. Die Eingabedaten kann der Regler der Heizvorrichtung online oder lokal aus einem Building Management System (BMS) erhalten. Beispielhafte weitere Eingabedaten sind
- Wetterdaten: Windgeschwindigkeiten, Sonneneinstrahlung, Luftfeuchtigkeit, und/oder
- Gebäudedaten: Raumtemperaturen (Soll und Ist), Fensteröffnungen, maschinelle Lüftung, Anwesenheit und/oder Türöffnungen.

Durch Hinzunahme der Raumisttemperaturen kann die Parametervariation deutlich schneller erfolgen, indem der Regler der Heizvorrichtung direkt den Einfluss einer Variation auf die Raumisttemperatur sieht. Bei gleicher Außentemperatur kann die Vorlauftemperatur gesenkt werden, soweit die Raumsolltemperaturen noch eingehalten werden. Dies kann bei verschiedenen Außentemperaturen automatisiert getestet werden und somit die niedrigste mögliche Vorlauftemperatur (bzw. Heizkennlinie) ermittelt und eingestellt werden.

Durch Hinzunahme von Wetterdaten können Einflüsse auf das Gebäude durch beispielsweise Sonneneinstrahlung oder Einflüsse auf die Wärmeaufnahme im Verdampfer der Heizvorrichtung durch z.B. Luftfeuchtigkeit mitberücksichtigt werden.

## Patentansprüche

1. Computer-implementiertes Verfahren zum Einstellen von mindestens einem Parameter in Bezug auf eine Heizvorrichtung, aufweisend die Schritte:
a. Einstellen der Heizvorrichtung mit mindestens einem ersten Wert des mindestens einen Parameters (S1);
b. Einstellen der Heizvorrichtung mit mindestens einem zweiten Wert des mindestens einen Parameters (S2); wobei
der mindestens eine zweite Wert durch Variieren des mindestens einen ersten Wertes bestimmt wird (S3);
c. Erfassen von Messdaten für die jeweiligen Einstellungen der mindestens zwei Einstellungen (S4); wobei
die Messdaten jeweils mindestens einen Messwert und mindestens einen Zielwert aufweisen;
d. Ermitteln eines optimalen Wertes aus der Mehrzahl der Werte mittels eines Optimierungsansatzes auf Basis der Messdaten (S5); und
e. Bereitstellen des optimalen Wertes des mindestens einen Parameters (S6).

2. Computer-implementiertes Verfahren nach Anspruch 1, wobei die Heizvorrichtung zur Beheizung von einem Gebäude oder einer Anlage eingerichtet ist.

3. Computer-implementiertes Verfahren nach Anspruch 1 oder Anspruch 2, wobei die Heizvorrichtung eine Wärmepumpe ist.

4. Computer-implementiertes Verfahren nach einem der vorhergehenden Ansprüche, wobei die Werte, der mindestens eine Parameter und/oder die Messdaten auf der Heizvorrichtung, bevorzugt auf einem Regler der Heizvorrichtung gespeichert sind, und/oder die Einstellung des mindestens einen Parameters auf der Heizvorrichtung erfolgt.

5. Computer-implementiertes Verfahren nach einem der vorhergehenden Ansprüche, wobei der mindestens eine Parameter ein Parameter ist, ausgewählt aus der Gruppe bestehend aus:
eine Heizkennlinie, eine Temperatur, eine Vorlauftemperatur, eine Solltemperatur und eine Speichertemperatur.

6. Computer-implementiertes Verfahren nach einem der vorhergehenden Ansprüche, wobei die Messdaten für die jeweiligen Einstellungen der mindestens zwei Einstellungen über mindestens einen bestimmten Zeitraum und/oder unter einem bestimmten Zustand erfasst werden.

7. Computer-implementiertes Verfahren nach einem der vorhergehenden Ansprüche, wobei die Ermittlung des optimalen Wertes einen Vergleich der jeweiligen Zielwerte der jeweiligen Einstellungen der mindestens zwei Einstellungen umfasst, und
der optimale Wert aus der Mehrzahl der Werte unter Berücksichtigung des Vergleichs ausgewählt wird.

8. Computer-implementiertes Verfahren nach Anspruch 7, wobei der optimale Wert aus der Mehrzahl der Werte des geringsten oder des höchsten Zielwertes ausgewählt wird.

9. Computer-implementiertes Verfahren nach einem der vorhergehenden Ansprüche, wobei der Zielwert ein Effizienzwert oder ein Nachhaltigkeitswert ist, wobei die Heizvorrichtung mit dem Zielwert effizient oder nachhaltig betrieben wird.

10. Computer-implementiertes Verfahren nach einem der vorhergehenden Ansprüche, weiterhin aufweisend
- Bereitstellen von weiteren Eingabedaten, und
- Berücksichtigung der weiteren Eingabedaten bei der Ermittlung des optimalen Wertes aus der Mehrzahl der Werte.

11. Computer-implementiertes Verfahren nach einem der vorhergehenden Ansprüche, wobei die weiteren Eingabedaten von einer Speichereinheit und/oder über eine Eingabeschnittstelle empfangen werden.

12. Computer-implementiertes Verfahren nach einem der vorhergehenden Ansprüche, weiterhin aufweisend
- Einstellen der Heizvorrichtung mit dem optimalen Wert des mindestens einen Parameters, und/oder
- Betreiben der Heizvorrichtung nach erfolgter Einstellung mit dem optimalen Wert des mindestens einen Parameters.

13. Computer-implementiertes Verfahren nach einem der vorhergehenden Ansprüche, weiterhin aufweisend
- Ausgeben des optimalen Wertes des mindestens einen Parameters und/oder zugehöriger Daten auf einer Anzeigeeinheit,
- Speichern des optimalen Wertes des mindestens einen Parameters und/oder zugehöriger Daten in einer Speichereinheit, und/oder
- Übermitteln des optimalen Wertes des mindestens einen Parameters und/oder zugehöriger Daten an eine Recheneinheit.

14. Technisches System zum Durchführen des Verfahrens nach einem der vorhergehenden Ansprüche.

15. Computerprogrammprodukt mit einem Computerprogramm, das Mittel zur Durchführung des Verfahrens nach einem der Ansprüche 1 bis 13 aufweist, wenn das Computerprogramm auf einer programmgesteuerten Einrichtung zur Ausführung gebracht wird.
